# EUROPEAN PATENT APPLICATION

(11) **EP 4 840 899 A1**
(43) Date of publication of application: **18.11.2026**
(21) Application number: 25738636.7
(22) Date of filing: 10.01.2025
(51) Int. Cl.: C08J 9/00, C08J 9/35, C08J 9/36, E04B 1/76, F16L 59/065, B32B 5/18

(54) **COMPACTED MICRO- OR NANOCELLULAR POLYMER MATERIAL AND VACUUM INSULATION PANEL COMPRISING A CORE OF SAID MATERIAL**

(30) Priority: 11.01.2024 ES 202430022
(71) Applicant: Cellmat Technologies S.L., 47011 Valladolid (ES)
(72) Inventor: ISMAEL, Sánchez Calderón, 47011 Valladolid (ES); VICTORIA, Bernardo García, 47011 Valladolid (ES); MIGUEL ÁNGEL, Rodríguez Pérez, 47011 Valladolid (ES)
(74) Representative: Balder IP Law, S.L.
(86) International application number: PCT/ES2025/070009
(87) International publication number: WO 2025/149701

(57) **Abstract**

The present invention discloses a polymer material in the form of compacted powder particles, characterised in that it has a bulk density between about 50 kg/m³ and about 350 kg/m³. The particles have a micro- or nanocellular structure. The present invention further discloses a vacuum insulation panel comprising said compacted polymer material as a core and a sealed covering that completely surrounds the core and maintains a vacuum inside the panel; a process for manufacturing the compacted polymer material; use of the compacted material as a core of the vacuum insulation panel; and use of said panel as thermal insulation.

## Description

### TECHNICAL FIELD

The present invention is comprised in the technical field of insulation materials and relates particularly to a polymer material comprising powder particles having a micro- or nanocellular structure with a specific cell size and a specific open cell content, wherein these particles are compacted together to form a compacted polymer material with a specific bulk density. Likewise, the present invention also relates to a vacuum insulation panel (also referred to herein as a "VIP panel") comprising said compacted polymer material as a core and a sealed covering that completely surrounds the core and maintains a vacuum inside the panel.

The invention also relates to a process for manufacturing the compacted polymer material described herein, wherein said process comprises obtaining a micro- or nanocellular polymer material in the form of powder and subsequently compacting it.

Additionally, the present invention also relates to the use of the compacted polymer material as a core in a vacuum insulation panel (VIP), and to the use of said panel as thermal insulation, particularly in the field of construction, but also in other fields such as in the packaging of temperature-sensitive material such as, for example, heat-sensitive medicinal products, organs, or vaccines, or in the field of refrigeration, i.e., in the manufacture of refrigerators, cold rooms, or refrigerated trucks.

### STATE OF THE ART

In recent years, economic development and improved living standards have led to a considerable increase in energy consumption, particularly in the field of construction. As a result, there is a need to improve energy efficiency in the development of this field, as without this improvement, energy demand in buildings is expected to increase by 50% by 2050. Therefore, the field of construction is crucial to achieving an efficient economy, both in terms of the use of current resources and in terms of reducing carbon emissions.

Given that buildings are currently responsible for about 40% of global energy consumption and 36% of greenhouse gas emissions, some governments, such as the European Union, have established legal frameworks to achieve greater energy performance in the field of construction (Directive 2010/31/EU of 19 May 2010 on the energy performance of buildings, Directive 2012/27/EU of 25 October 2012 on energy efficiency, amending Directives 2009/125/EC and 2010/30/EU and repealing Directives 2004/8/EC and 2006/32/EC, (2012)). In particular, it is known that more than 40% of the energy used in buildings is intended for their temperature regulation. Therefore, a key factor in reducing energy consumption and CO₂ emissions associated with energy demand in buildings is performance optimisation by means of thermally insulating said buildings.

In this regard, it is well known that the physical parameter typically used to quantify the thermal insulation performance of a given material is thermal conductivity, which is a physical property that describes heat transfer through the body of said material due to a temperature gradient. Therefore, the thermal conductivity of cellular polymeric materials (also referred to as "polymer foams") used for thermal insulation can be calculated as the sum of four heat transfer mechanisms: thermal conductivity through the solid phase, *λs*, thermal conductivity through the gaseous phase, *λg*; thermal conductivity by radiation, *λr*; and thermal conductivity by convention, λc. However, in those materials having a pore size below 4 mm, as is the case with most materials used as thermal insulators on the market, convection is negligible and, therefore, the thermal conductivity for insulation materials of this type is considered to be determined by the sum of the values of λs, λg, and λr (Equation 1). $λ = {λ}_{s} + {λ}_{g} + {λ}_{r}$ (1)

Materials that are used today in the field of construction, such as polyurethanes (PUs), mineral wool, expanded polystyrene (EPS), and extruded polystyrene foam (XPS) have thermal conductivity values around about 25-40 mW/m K. Different strategies are being presented to improve the thermal insulation capacity of these materials such that they comply with current legislation, particularly with the aforementioned European Union directives. On the one hand, a possible solution consists of increasing the thickness of the insulation layer of conventional insulation materials. However, this involves the use of significantly larger amounts of material, which in turn means that more CO₂ is emitted into the environment and that the usable area of buildings is reduced. On the other hand, another strategy consists of developing new thermal insulators having lower thermal conductivity values. This strategy is more promising because it will not only allow energy saving but also increase the usable area of buildings, obtaining one and the same thermal insulation with a reduced thickness. Therefore, obtaining new thermal insulators is a mandatory task for improving energy efficiency in the field of construction.

In recent years, there has been a growing interest in the development of nanocellular polymers (i.e., polymers with cells or pores with a size below 1 micron) as new thermal insulation materials due to the advantageous combination of their properties. In particular, materials of this type are lightweight, low-cost, recyclable, exhibit reduced thermal conduction through the gaseous phase and improved mechanical properties. Therefore, one of the most relevant properties of nanocellular polymers of this type is that they have a reduced value for thermal conductivity through the gas phase due to the Knudsen effect (B. Notario, J. Pinto, E. Solorzano, J.A. de Saja, M. Dumon, M.A. Rodriguez-Perez, Experimental validation of the Knudsen effect in nanocellular polymeric foams, Polymer (Guildf). 56 (2015) 57-67*)*. Due to this effect, the thermal conductivity of the gaseous phase inside the pores may have values even lower than the thermal conductivity values obtained in air, 24.4 mW/(m·K) at 10°C (Forest, C., Chaumont, P., Cassagnau, P., Swoboda, B., & Sonntag, P. (2015). Polymer nano-foams for insulating applications prepared from CO2 foaming. Progress in Polymer Science, 41, 122-145).

However, the production of nanocellular polymers still proves a challenge, particularly with regard to low-density nanocellular polymers*.* Furthermore, manufacturing processes are limited mainly to laboratory scale, while the production of samples with larger dimensions is a complex task. Therefore, many authors have attempted to theoretically predict the thermal properties of these materials. For example, Wang *et al*. *(*G. Wang, C. Wang, J. Zhao, G. Wang, C.B. Park, G. Zhao, Modelling of thermal transport through a nanocellular polymer foam: Toward the generation of a new superinsulating material, Nanoscale. 9 (2017*))* mathematically modeled heat transfer through a nanocellular polymer. Their model proposed that the contribution of radiation started to become very significant in low-density nanocellular polymers. In that sense, they predicted that the minimum conductivity that can be obtained with these materials is not as low as expected. On the other hand, Buahom *et al*. (P. Buahom, C. Wang, M. Alshrah, G. Wang, P. Gong, M. P. Tran, C. B. Park. Wrong expectation of superinsulation behavior from largely-expanded nanocellular foams, Nanoscale. 12 (2020) 13064-13085*)* discloses a mathematical model for predicting the thermal conductivity of microcellular and nanocellular polymer foams such as polystyrene (PS) foams and poly(methyl methacrylate) (PMMA) foams, wherein said materials had different relative densities and different cell sizes. In particular, these authors found a minimum thermal conductivity value of 37 mW/(m K) measured at 27°C (300 K) for the case of nanocellular PMMA with a relative density of 0.1 and a cell size of 100 nm. Recently, the inventors of the present patent application have proven with experimental results and by means of modelling that the thermal conductivity of nanocellular polymers could be limited to higher values of 34 mW/(m K) (at 10°C) or 37 mW/(m K) (at 20°C), even in the case of samples having low density values *(*I. Sanchez-Calderón, V. Bernardo, J. Martin-de-León, M. Á. Rodriguez-Perez. Thermal conductivity of low-density micro- and nanocellular poly(methyl-methacrylate) (PMMA): Experimental and modeling, Mater. Des. 221 (2022) 110938*)*.

On the other hand, vacuum insulation panels (VIPs) are super thermal insulators. A super thermal insulator is characterised by having a thermal conductivity lower than that of air (24.4 mW/(m K) at 10°C). A VIP panel can be described as a panel comprising a porous material (core), that has been emptied out, located within a closed cover, such that it maintains a vacuum inside the panel. In particular, VIP panels are the insulation materials that exhibit the lowest thermal conductivity on the market, having thermal conductivities between 4 and 10 mW/(m K). This low thermal conductivity is due to the fact that, by creating a vacuum in the core, conduction through the gaseous phase is eliminated, drastically reducing conductivity. However, the VIPs known to date present significant problems, such as their high cost and recyclability, given that the core is usually formed by silica powder. For example, fumed silica is one of the most widely used porous materials. This porous material is mixed with different fibres and additives to give rise to a VIP that has several disadvantages. In particular, fumed silica is a costly material that is difficult to process and poses problems for human health.

Work performed to date in relation to nanocellular polymers has shown that the thermal conductivity values that these polymers may reach are much higher than the values obtained for other nanoporous materials such as aerogels. This is believed to be the result of the contribution of the other two heat transfer mechanisms (radiation and conduction through the solid phase) which increase the total thermal conductivity value, despite the decrease in gasesous phase conduction as cell size decreases to the nanoscale. In fact, the inventors of the present invention have developed a semi-empirical model to predict the thermal conductivity of low-density microcellular and nanocellular poly(methyl methacrylate), PMMA, and have proven that heat transfer by radiation is a factor with significant impact when the density and cell size decrease *(*I. Sánchez-Calderón, V. Bernardo, J. Martin-de-León, M. Á. Rodríguez-Pérez. Thermal conductivity of low-density micro and nanocellular poly(methyl-methacrylate) (PMMA): Experimental and modeling. Mater. Des. 221 (2022) 110938). Furthermore, it was also observed that conduction through the solid phase had a great influence on the expected thermal conductivity values.

In view of the above, it is clear that there is a growing need to develop improved thermal insulation materials that comply with current environmental legislation, given that conventional insulation materials, such as XPS or PU, are already reaching the limits of their possibilities.

As mentioned above, nanocellular polymers, characterised by having a cell size below 1 µm represent an attractive alternative to materials currently on the market due to the combination of their properties. However, there are still some outstanding challenges that need to be addressed to fully realize the potential of these nanocellular polymers, such as the reduction of thermal conduction through the solid phase and by radiation, as well as the large-scale manufacturing of these low-density materials.

### DESCRIPTION OF THE INVENTION

One aspect of the present invention relates to a polymer material in the form of compacted powder particles, wherein the material has a bulk density between about 50 kg/m³ and about 350 kg/m³, and wherein the particles have a cellular structure with a cell size between about 50 nm and about 10 µm, and an open cell content of about 80%, preferably above about 90%.

The polymer material in the form of compacted powder particles of the present invention (also referred to herein as a "compacted polymer material" or a "compacted micro- or nanocellular polymer material") has a significant advantage in that it can be used as a core in a vacuum insulation panel, as known in the field as "VIP panel" or "VIP". This panel has a surprisingly low thermal conductivity, particularly, it may have a thermal conductivity, measured in a temperature condition of 10°C and a vacuum pressure condition of 0.02 mbar (0.002 kPa), between about 6 mW/(m·K) and about 25 mW/(m·K), preferably between about 6 mW/(m·K) and 15 mW/(m·K), and it can be even lower, particularly between about 4 mW/(m·K) and about 22 mW/(m·K), preferably between about 4 mW/(m·K) and about 12 mW/(m·K), when the compacted polymer material of the invention comprises at least one infrared radiation blocking agent.

This reduced conductivity can even be achieved from microcellular polymer materials (i.e., with an average pore size between about 1 µm and about 10 µm), that are easier to obtain with low densities than nanocellular materials. Furthermore, obtaining the compacted polymer material from a micro- or nanocellular powder polymer material as described in the present invention allows VIP panels to be readily obtained with a large variety of dimensions and geometries, entailing an additional advantage in the industrial manufacturing of these panels.

In the context of the present invention, it should be understood that the terms "polymer material in the form of compacted powder particles", "compacted polymer material", and "compacted micro- or nanocellular polymer material" are interchangeable and refer to a polymer material, particularly with the composition described herein, comprising powder particles of said material, preferably with an average particle size between about 1 µm and about 500 µm, more preferably between about 5 µm and about 200 µm, which has been subjected to a compaction process, such that these powder particles are bonded together in such a way that the space between them has been significantly reduced, being able to be eliminated completely. Furthermore, the particles of the compacted polymer material described herein have a porous micro- or nanocellular internal structure with a cell or pore size between about 50 nm and about 10 µm and an open cell content above about 80%, preferably above about 90%.

In this way, the compacted polymer material of the present invention may have a wide variety of macroscopic shapes and geometries, and self-supporting parts with large dimensions can be obtained.

The compacted micro- or nanocellular polymer material object of this invention can be obtained by compacting a polymer material in the form of powder as described herein. This compaction process can be carried out by methods known by one skilled in the art, such as, for example, but in a non-limiting manner, by means of using a hot plate press, wherein the temperature, pressure, and the duration of the process can be readily established depending on the polymer or polymers comprised in the polymer matrix. Therefore, for example, if the polymer matrix is formed by PMMA, compaction may take place at a temperature of about 70-90°C, preferably 80°C, for a time period of about 15-60 minutes, preferably 30 minutes, at a pressure of about 5-20 MPa, preferably 13.6 MPa.

The bulk density of the compacted polymer material described herein is between about 50 kg/m³ and about 350 kg/m³, preferably between about 50 kg/m³ and about 250 kg/m³, and more preferably between about 50 kg/m³ and about 150 kg/m³.

The bulk density of the compacted material according to the present invention can be obtained according to the UNE-EN 1602:2013 standard by measuring the geometric volume (V) and the mass (m) of the fraction of compacted material of interest (ρ ₐₚₚ =m/V).

The compacted micro- or nanocellular polymer material described herein has particles having a cellular structure with cells having an average size between about 50 nm and about 10 µm. More specifically, polymer materials with particles having an internal structure formed by cells having an average size below 1 µm are referred to as "nanocellular materials", while materials with particles having cells with an average size between 1 µm and 10 µm are referred to as "microcellular materials".

Furthermore, in the context of the invention, "cell" refers to the pores forming the internal structure of the polymer material at hand, and therefore the terms "cell" or "pore" can be used interchangeably. More specifically, in the particular case of the compacted polymer material of the present invention, this term refers to the pores forming the internal structure of the particles that form said material.

The cellular structure of the compacted polymer material according to the invention can be analysed by means of scanning electron microscopy (SEM). For example, a scanning electron microscope SEM (FlexSEM 1000 VP-SEM) can be used. To that end, samples can be cooled with liquid nitrogen and broken down, thus maintaining the structure of the cell for subsequent microscopic viewing. Furthermore, samples can be gold coated by means of sputtering (model SCD 005, Balzers Union). To obtain a complete analysis of the cellular structure, several parameters can be determined by means of SEM. Furthermore, scanning electron microscopy images can be combined with image analysis software such as, for example, ImageJ/FIJI, which allows obtaining the mean cell size in 3D (Φ _{3D}), the cell distribution, and the standard deviation coefficient. The data obtained corresponds to a 2D analysis and can be corrected by applying a correction factor of 1.273 to the two-dimensional values measured in the micrograph obtained by SEM in order to obtain 3D values (J. Pinto, E. Solórzano, M.A. Rodriguez-Perez, J.A. De Saja, Characterization of the cellular structure based on user-interactive image analysis procedures, J. Cell. Plast. 49 (2013) 555-575*).*

The compacted polymer material of the present invention comprises particles with a cellular structure having an average cell size between about 50 nm and about 10 µm, preferably between about 100 nm and about 5 microns, more preferably between about 500 nm and about 2 microns. Said cell size provides beneficial characteristics to the polymer material such as reduced heat conduction through the gaseous phase due to the appearance of the Knudsen effect.

In the context of the invention, "open cell content" is understood to mean the interconnection between the cells of the cellular polymer material. This interconnection may arise from the absence of walls in the cells or the presence of holes in the walls thereof. In the particular case of the compacted polymer material of the present invention, this term refers to the interconnection between the cells in the internal structure of the particles forming said material.

The open cell (OC) content of the materials according to the invention can be determined by means of the ISO 4590:2016 standard from the following equation using, for example, a gas pycnometer (particularly, model AccuPyc II 1340, Micromeritics), $OC \left(%\right) = \frac{V - {V}_{pyc}}{V \left(1-{ρ}_{r}\right)} ⋅ 10$ wherein V is the geometric volume and V_{pyc} is the volume obtained by means of the measurement of the pycnometer. V_{pyc} can be determined using a pressure of 19.5 psig (134.5 KPa) The gas used can be N₂.

The inventors found that the compacted polymer material of the invention with an open cell content above about 80%, preferably above about 90%, is highly beneficial in terms of its properties given that it allows gaseous phase to be extracted from inside the cells when vacuum pressure is applied, which is particularly advantageous for obtaining the VIP panels of the invention.

In particular embodiments, the compacted polymer material of the present invention can be obtained by compacting a polymer material in the form of powder with an average particle size between about 1 µm and about 500 µm, preferably between about 5 µm and about 200 µm.

The size of the powder particles can be reduced slightly during the compaction process, although this effect is generally insignificant. Therefore, in particular embodiments, the compacted polymer material of the present invention may comprise powder particles with an average particle size between about 1 µm and about 500 µm, preferably between about 5 µm and about 200 µm.

The average particle size of the compacted particles can be determined by means of conventional techniques for particle size determination in materials in the form of powder, such as image analysis, tomography, or laser diffraction. Particularly, it can be obtained by means of a particle size analyser LS13 320 (Beckman Coulter).

In the context of the present invention, the compacted polymer material comprises a polymer matrix that can be formed by one or more amorphous polymers, thermoplastic elastomers, and/or semicrystalline polymers. In particular embodiments, the polymer matrix may comprise one or more polymers selected from the group consisting of:
- amorphous polymers selected from poly(methyl methacrylate) (PMMA), polystyrene (PS), polyetherimide (PEI), polycarbonate (PC), and polyphenylsulfone (PSU);
- thermoplastic elastomers selected from thermoplastic polyurethane (TPU), thermoplastic polyolefin (TPO), and thermoplastic polyether polyamide (PEBA);
- semicrystalline polymers selected from low-density polyethylene (LDPE), high-density polyethylene (HDPE), ethyl vinyl acetate (EVA), and polypropylene (PP); and
- a combination of the foregoing.

In preferred embodiments of the present invention, the polymer matrix comprises PMMA or PS, more preferably PMMA.

In the context of the invention, the polymer or combination of polymers of the polymer matrix is the main component in the compacted polymer material, as well as in a powder polymer material or the starting polymer material (for example: a plate, a sheet, or beads) used to obtain said compacted polymer material. This polymer or combination of polymers may be comprised in an amount ranging from about 70% by weight to about 100% by weight, preferably between about 85% by weight and about 98% by weight, all the percentages being expressed by weight with respect to the total weight of the polymer material to which reference is made.

The compacted polymer material according to the invention may further comprise at least one nucleating agent in the polymer matrix, particularly organic polymers or nanoparticles. The nucleating agent can be selected from the group consisting of:
- nanoparticles selected from nanosilica, nanoclay, nanometric sepiolites, and nanofibres;
- organic polymers selected from acrylic block copolymers, styrene block copolymers, and thermoplastic elastomers; and
- a combination of the foregoing.

The addition of at least one nucleating agent when manufacturing a polymer material with a micro- or nanocellular structure (also referred to herein as a "starting polymer material") allows improvement in the nucleation rate (number of cells per cm³) of the obtained polymer material and, accordingly, reduction in cell size, allowing nanometric cells to be obtained in some systems in which the starting polymer would not allow same, or allowing nanometric structures to be obtained in process conditions that are less demanding than those required when the same polymer matrix is used without a nucleating agent. In particular, when a nucleating agent is used, lower pressures are required during saturation in the gas dissolution foaming process. This nanometric structure of the starting polymer material is maintained in the compacted polymer material of the present invention, particularly when said material is obtained by micronisation and compaction processes such as those described herein.

In the context of the invention, the nucleating agent may be comprised in the polymer matrix in the compacted polymer material, as well as in the polymer matrix of a powder or starting polymer material (for example: a plate, a sheet, or beads) used to obtain said compacted polymer material, in an amount ranging from about 0.01% to about 5% by weight, preferably from about 0.01% to about 2% by weight, more preferably from about 0.01% to about 1%, all the percentages being expressed by weight of nucleating agent with respect to the total weight of the polymer material to which reference is made.

In preferred embodiments, the compacted polymer material described herein comprises a PMMA matrix, has a bulk density between about 50 kg/m³ and about 250 kg/m³, particularly about 200 kg/m³ or about 80 kg/m³, and comprises compacted powder particles having a cellular internal structure with an average cell size between about 100 nm and about 5 microns, preferably about 3 microns, and an open cell content above about 80%, preferably above about 90%.

In other preferred embodiments of the invention, the compacted polymer material comprises the PMMA polymer and PMMA-PBA-PMMA acrylic block copolymer (PBA: poly(butyl acrylate)) as a nucleating agent, wherein the polymer:nucleating agent ratio by weight is 99.95:0.05. This compacted polymer material has a bulk density of about 180 kg/m³ and comprises compacted powder particles having a cellular internal structure with an average cell size of about 800 nm, and an open cell content of about 90%.

Furthermore, the compacted polymer material described herein may comprise an infrared (IR) radiation blocking agent, also known in the field of the invention as an opacifier, which allows thermal conductivity due to radiation to be reduced, thus improving its capacity as thermal insulation, as well as the capacity of a VIP panel wherein the core comprises said compacted polymer material.

This IR radiation blocking agent can be incorporated in the polymer matrix, i.e., it can be added during the process of manufacturing the starting micro- or nanocellular polymer material (for example: a sheet, a plate, or beads). However, the present invention also allows the compacted polymer material to comprise a material based on a polymer matrix physically mixed with one or more infrared radiation blocking agents. Therefore, for example, the compacted polymer material of the invention can be readily obtained by mixing, before the compaction process, one or more IR radiation blocking agents in the form of powder with a powder polymer material, wherein this material comprises a polymer matrix and, optionally, additional additives as described herein.

In particular embodiments of the invention, the infrared radiation blocking agent can be selected from the group consisting of graphite, carbon black, silicon carbide, titanium oxide, graphene, carbon nanotubes, and a combination of the foregoing; preferably it is silicon carbide.

In the context of the invention, the infrared radiation blocking agent may be comprised in the compacted polymer material in an amount between about 0.5% and about 30%, preferably between about 5% and about 15%, all the percentages being expressed by weight of infrared radiation blocking agent with respect to the total weight of the compacted polymer material.

The presence of an infrared radiation blocking agent in the polymer material of the invention allows a reduction of the thermal conductivity value of said material of up to 5 mW/(m·K). For example, the compacted polymer material of the invention may go from having values of about 30-50 mW/(m·K) to about 25-45 mW/(m·K), measured at a temperature of 10°C and a pressure of 1013 mbar (101.3 kPa), when it comprises PMMA as a polymer and an infrared radiation blocking agent such as silicon carbide, particularly the compacted polymer material may also comprise a nucleating agent and the weight ratio of polymer/nucleating agent/blocking agent can be 89.95:0.05:10.00, respectively.

The compacted polymer material of the present invention may comprise other additional additives such as dyes, desiccants, absorbents, flame retardant agents, additives with low thermal conductivity, or a combination of the foregoing. These additional additives allow the properties of the polymer material according to the present invention to be improved. For example, the presence of flame retardant agents improves the fire-resistant behaviour of the compacted polymer materials, dyes improve their physical aspect, desiccants contribute to reducing the amount water these materials have, while additives with low thermal conductivity allow the thermal conductivity of the panel to be further reduced.

The dyes can be inorganic dyes, particularly oxides such as calcium oxide, iron oxides, or chromium oxides, or can be organic dyes such as aromatic compounds.

Suitable desiccants in the context of the invention can be, for example, and in a non-limiting manner, silica gel or fumed silica.

Suitable absorbents in the context of the invention can be, for example, and in a non-limiting manner, zeolites, activated carbon, or metal alloys.

Flame retardant agents which can be used according to the inventioncan be metal hydroxides, halogen compounds, intumescent compounds, or non-halogen compounds.

Additional additives with low thermal conductivity can be, for example, powder silicas or aerogels.

As mentioned above, the present invention allows the compacted polymer material to comprise a polymer matrix mixed with one or more additional additives, since this compacted material can be readily obtained by mixing, before the compaction process, one or more additional additives in the form of powder with a powder polymer material, wherein this material comprises a polymer matrix and, optionally, an IR radiation blocking agent and/or other additional additives as described herein.

In the context of the invention, any of these additional additives may be comprised in the compacted polymer material in an amount equal to or less than about 10%, preferably equal to or less than about 5%, all the percentages being expressed by weight with respect to the total weight of the polymer material.

Therefore, the compacted polymer material according to the present invention may have a composition in which the main component is the polymer or combination of polymers of the polymer matrix, further comprising one or more of the additional components described above such as nucleating agents, infrared radiation blocking agents, and/or additional additives. If present, the nucleating agent is comprised in the polymer matrix, while the infrared radiation blocking agent and/or any additional additive as described herein may be comprised in the polymer matrix and/or may be mixed with said matrix (powder) during the process of manufacturing the compacted polymer material of the invention. For example, the polymer material described herein may comprise a mixture of any of the polymers described above, preferably PMMA, a nucleating agent, and an infrared radiation blocker in a weight ratio of about 89.95:0.05:10.00, respectively.

In more particular embodiments of the invention, the compacted polymer material may comprise a polymer matrix made of PMMA, PMMA/PBA/PMMA copolymer as a nucleating agent, silicon carbide as an infrared radiation blocker, and a non-halogenated flame retardant, wherein these components are present in the polymer material in a weight ratio of between about 84% and about 90% of PMMA, between about 0.01% and about 0.5% of the nucleating agent, preferably between about 0.05% and about 0.1% of the nucleating agent, between about 9.9% and about 14.5% of the infrared radiation blocking agent, and between about 0.9% and about 0.95% of the retardant agent, all the amounts being expressed by weight with respect to the total weight of the polymer material.

The inventors surprisingly found that the compacted polymer material according to the present invention has improved properties with respect to other polymer materials that are currently on the market. Particularly, when the compacted polymer material described herein is subjected to vacuum conditions, it has thermal conductivity values between about 6 mW/(m·K) and about 25 mW/(m·K), preferably between about 6 mW/(m·K) and 15 mW/(m·K), measured at a temperature of 10°C and vacuum pressure of 0.02 mbar (0.002 kPa). As a result, the compacted polymer material of the present invention is particularly suitable for use as a core in VIP panels.

In particular embodiments in which the compacted polymer material comprises at least one IR radiation blocking agent as described herein, the thermal conductivity, measured in a temperature condition of 10°C and a pressure condition of 0.02 mbar (0.002 kPa), can be between about 4 mW/(m·K) and about 22 mW/(m·K), preferably between about 4 mW/(m·K) and about 12 mW/(m·K).

The thermal conductivity values of all the materials according to the present invention can be determined according to the ASTM C518 standard and the ISO 8301:1991 standard measured at a temperature of 10°C and atmospheric pressure (considered as 1013 mbar (101.3 kPa)), or vacuum pressure, particularly at a pressure of 0.02 mbar (0.002 kPa), particularly by means of a TA Instruments FOX 200 stationary conductivity meter.

In this way, the inventors surprisingly found that the reduction in thermal conductivity values measured at 10°C when subjecting the compacted polymer material to vacuum was greater than expected. Without being bound by any theory, this is considered to be the result of the extraction of the gaseous phase from the material when subjecting it to vacuum pressure (between about 0.02 mbar (0.002 kPa) and about 10 mbar (1 kPa)). Particularly, a reduction in conductivity between about 25 mW/(m·K) and about 35 mW/(m·K) was observed. Meanwhile, the reduction in thermal conductivity values observed when subjecting nanocellular starting materials (non-compacted powder particles), having a continuous solid phase and similar cell size and density values, to vacuum pressure, taking into account conduction through the gaseous phase and the Knudsen effect, was between about 10 mW/(m·K) and about 20 mW/(m·K) (I. Sánchez-Calderón, V. Bernardo, J. Martín-de-León, M.Á. Rodríguez-Pérez, Thermal conductivity of low-density micro-and nanocellular poly(methyl-methacrylate) (PMMA): Experimental and modeling, Mater. Des. 221 (2022) 110938*).* Therefore, the reduction in thermal conductivity values observed in the compacted polymer material according to the invention was almost twice that expected, so the inventors of the present invention concluded, without being bound by any theory, that there must be an additional heat transfer mechanism associated with the gaseous phase of the compacted polymer material of the present invention.

As mentioned above, the thermal conductivity of a material the pore or cell size of which is below 4 mm is defined based on a total of three mechanisms: thermal conductivity through the gaseous phase, thermal conductivity through the solid phase, and thermal conductivity by radiation. All of them can be considered additive as a first approximation.

In the micronised polymer material described herein, without being bound by any theory, the inventors consider that the lower density of the polymer material in the form of powder, as well as the presence of contact points between the powder particles that provide additional thermal resistance, lead to a reduction of thermal conductivity through the solid phase, λs. Likewise, the discontinuous structure of the cellular polymer material of the invention, wherein the powder particles form micrometric gaps between them that may act as radiation scattering points, leads to a reduction of thermal conductivity due to radiation, λr. However, the fraction of thermal conductivity through the gaseous phase increases in the micro- or nanocellular powder polymer material of the invention, since this fraction can in turn be divided into two: conduction through cells, λ _{g,c} and a new mechanism of conduction through the gaps (space between the powder particles), λ _{g,v.}

Furthermore, without being bound by any theory, the inventors consider that the presence of the micrometric particles of the micronised polymer material induces a new unexpected heat transfer mechanism: a coupling effect due to heat transfer between the solid phase and the gaseous phase, λ _{coup.} As a result of this new mechanism, the thermal conductivity of the material in the form of powder and of the starting material (non-micronised) are usually very similar.

The inventors also consider, again without being bound by any theory, that the two new components of thermal conductivity mentioned above: conduction through the spaces between the powder particles, λ _{g,v}, and the coupling effect due to heat transfer between the solid phase and gaseous phase, λ _{coup}, are reduced significantly (and may even be eliminated) when the micronised polymer material described herein is compacted and subjected to vacuum pressure to obtain the VIP panels of the present invention, giving rise to a surprisingly low resulting thermal conductivity, particularly between about 6 mW/(m·K) and about 25 mW/(m·K), preferably between about 6 mW/(m·K) and about 15 mW/(m·K), measured in a temperature condition of 10°C and a pressure condition of 0.02 mbar (0.002 kPa); and it may be even lower, particularly between about 4 mW/(m·K) and about 22 mW/(m·K), preferably between about 4 mW/(m·K) and about 12 mW/(m·K), when the compacted polymer material comprises at least one infrared radiation blocking agent as described herein.

Another aspect of the present invention relates to a process for manufacturing the compacted polymer material as described herein, wherein said process comprises the following steps:
a) obtaining a polymer material in the form of powder, wherein said material comprises at least one polymer and, optionally, at least one additional component selected from a nucleating agent, an infrared radiation blocker, an additional additive, and a combination thereof, and wherein this polymer material in the form of powder has:
   - an average particle size between about 1 µm and about 500 µm, preferably between about 5 µm and about 200 µm;
   - a bulk density between about 25 kg/m³ and about 250 kg/m³;
   - a cellular structure with a cell size between about 50 nm and about 10 µm and an open cell content above about 80%, preferably above about 90%; and
b) compacting the polymer material in the form of powder obtained in step a) to obtain a compacted polymer material.

The polymer material in the form of powder of step a) can be obtained by means of micronisation or another conventional technique for reducing the particle size of the starting micro- or nanocellular material (for example, a sheet, a plate, or beads). As a result, in the context of the invention, it will be referred to interchangeably as a "polymer material in the form of powder" or a "micronised polymer material". Likewise, this polymer material may have a micro- or nanocellular structure (with a cell size between about 50 nm and about 10 µm), so in the context of the invention it can also be referred to as a "micro- or nanocellular polymer material in the form of powder" or a "micronised micro- or nanocellular polymer material".

In particular embodiments, step a) may comprise using liquid nitrogen to freeze a starting micro- or nanocellular polymer material (for example, a plate, a sheet, or beads) before the milling or micronisation process. The starting polymer material may have to be previously milled or ground, thereby obtaining a material with the suitable size for subsequent milling or micronisation to obtain a powder with an average particle size between about 1 µm and about 500 µm, preferably between about 5 µm and about 200 µm. The cellular structure of the starting polymer material is maintained after the micronisation or milling process, even for microcellular materials, and the percentage of open cell can be increased, which is advantageous for using the compacted polymer material of the present invention as a core in vacuum insulation panels.

An additional advantage of the manufacturing process of the present invention is that it allows the incorporation of the IR radiation blocking agent and/or any other additional additive that may be of interest, by simply mixing the polymer matrix in the form of powder with the IR radiation blocking agent and/or the additive at hand, resulting in the micro- or nanocellular polymer material in the form of powder described herein. In this way, with the exception of the nucleating agent, it is not necessary to include said additional component when manufacturing the starting micro- or nanocellular polymer material (foaming process), rather it can be added by means of simple mixing after the micronisation process or another conventional method for reducing the average particle size of the cellular polymer matrix to the values established herein. Therefore, the polymer material in the form of powder may comprise powder particles of a micro- or nanocellular polymer matrix formed by one or more polymers and, optionally, one or more nucleating agents, in combination with powder particles of at least one IR radiation blocker and one or more additional additives as defined herein. The average particle size of the IR radiation blocking agent and/or the additional additives is preferably less than or equal to the size of the particles of the polymer matrix in the form of powder to allow the resulting mixture to be well compacted. In particular embodiments, the IR radiation blocking agent and/or the additional additives which are mixed with the micro- or nanocellular polymer matrix to obtain the polymer material in the form of powder have an average particle size below 500 microns, more preferably below 200 microns.

However, in the context of the invention, the polymer matrix of the micronised polymer material may comprise infrared radiation blocking agents and/or one or more of the additional additives described in relation to the compacted polymer material, preferably in the indicated amounts, in addition to one or more polymers and, optionally, one or more nucleating agents. Therefore, in particular embodiments of the invention, the IR radiation blocking agent and/or any of the additional additives described herein can be incorporated in the polymer matrix of the starting micro- or nanocellular polymer material (for example: a plate, a sheet, or beads), and therefore may also be comprised in the polymer matrix of the polymer material in the form of powder obtained in step a) of the manufacturing process of the invention.

Moreover, the compacted polymer material of the present invention can be obtained from mixing micronised polymer materials of different bulk density, cell size, open cell content, and/or particle size. Therefore, the compacted polymer material resulting from the mixing has intermediate characteristics with respect to the two (or more) micronised starting polymer materials used to obtain the polymer material in the form of powder of step a) of the manufacturing process of the invention. The micronised materials to be mixed can be based on different compositions with different polymers and/or different additive contents.

The average particle size of the micronised polymer material described herein can be determined by means of the laser diffraction (LD) technique, particularly in accordance with the ISO 13320:2020 standard. Laser diffraction allows determining the particle size distribution in materials having particles with a size between about 40 nm and about 2000 µm. For example, a LS13 320 particle size analyser (Beckman Coulter) can be used, in which, in order to perform the analysis, particles in the form of powder are dispersed for one minute in ethanol with the aid of ultrasound. The particles are then analysed in a ULM module. Therefore, assuming that the particles are spherical, this technique provides a particle size distribution in volume percentage (% volume), from which the average particle size (D) can be calculated.

The bulk density of the micronised polymer material corresponds to the mass of the powder particles divided by the total volume occupied by said particles, this total volume including both the volume of the particles and the empty volume between them and in their internal structure. This bulk density can be determined according to the ISO 60:1977 standard. To that end, a known volume (V) of a container can be filled with a given mass (m) of the powder cellular polymer material and said container is then filled to the top (ρ _{app_M} =m/V).

The polymer material in the form of powder in the context of the invention has a bulk density between about 25 kg/m³ and about 250 kg/m³, preferably between about 25 kg/m³ and about 100 kg/m³.

The polymer material in the form of powder in the context of the present invention is a micro- or nanocellular polymer material characterised by a double porosity, i.e., it has an internal structure formed by cells (also referred to as pores) but, since it is in the form of powder, it also has a second external structure due to the gaps generated between the particles of the powder. Surprisingly, the cellular structure is maintained even with cell sizes above 1 µm, particularly for micronised polymer materials with an average particle size between about 20 µm and about 500 µm.

The polymer material in the form of powder in the context of the present invention is characterised by having a discontinuous solid phase or structure with micrometric particles, i.e., in the range between about 1 µm and about 500 µm, preferably between about 5 µm and about 200 µm, wherein these micrometric particles have a cellular internal structure formed by cells with a size between about 50 nm and about 10 µm, wherein more than about 80%, preferably more than about 90%, of these cells are open cells. Therefore, the polymer material in the form of powder in the context of the present invention has a double porosity formed by micro- or nanometre-sized cells (inside the particles) and micrometric gaps (between the particles).

When the polymer of the polymer matrix is PMMA, the micronised polymer material described herein may have a thermal conductivity (measured at a temperature of 10°C and at atmospheric pressure of 1013 mbar (101.3 kPa)) between about 30 mW/(m·K) and about 50 mW/(m·K), preferably between about 32 mW/(m·K) and about 40 mW/(m·K).

To obtain the compacted polymer material, in step b) of the manufacturing process of the invention, the micronised polymer material is subjected to a compaction process, which can be carried out by methods known by one skilled in the art such as, for example, the use of a hot plate press, wherein the temperature and duration of the process can be readily established depending on the characteristics of the polymer material in the form of powder. Therefore, for example, if the polymer comprised in the polymer matrix is PMMA, compaction may take place at a temperature of about 80°C for a period of about 30 minutes and, preferably, at a pressure of 13.6 MPa.

Due to the compaction process, an increase in bulk density occurs with respect to the micronised polymer material, so the compacted polymer material according to the present invention has a higher bulk density value in relation to the micronised polymer material. Particularly, the bulk density of the compacted polymer material is between about 50 kg/m³ and about 350 kg/m³, preferably between 50 and about 150 kg/m³.

The cell size and open cell content of the micronised polymer material obtained in step a) can be determined using the same methods described above for the compacted polymer material. The open cell content is not modified by means of the compaction process, while the cell size may be slightly reduced due to increased density. Likewise, the average particle size may also be slightly reduced after the compaction process, although this effect is generally insignificant.

The compacted polymer material described herein may have various shapes and sizes, allowing VIP panels of very different sizes and geometries to be obtained. In particular embodiments of the invention, the compacted polymer material can be used to manufacture a VIP panel with variable dimensions that may be between 10x10 mm² and 500x500 mm² and/or a thickness that may vary from 10 to 50 mm.

For one and the same polymer material composition, the thermal conductivity of the micronised polymer material and of the compacted polymer material at atmospheric pressure (1013 mbar (101.3 kPa)) are similar or lower than those of the starting polymer material, despite the fact that both the micronised polymer material and the compacted polymer material had higher density values. Without being bound by any theory, this is believed to be the result of the greater discontinuity of the solid phase of both the micronised polymer material and the compacted polymer material of the present invention, which allows thermal conductivity values to be reduced by means of mechanisms that are not present in the continuous structure of the starting nanocellular polymer materials.

Therefore, when the polymer matrix comprises PMMA, the compacted polymer material according to the present invention may have a thermal conductivity (measured at a temperature of 10°C and a pressure of 1013 mbar (101.3 kPa)) between about 30 mW/(m·K) and about 50 mW/(m·K), preferably between about 32 mW/(m·K) and about 40 mW/(m·K).

The present invention also relates to the polymer material in the form of compacted powder particles as described herein, wherein, preferably, said material is obtained or can be obtained by the manufacturing process of the invention.

The polymer material in the form of powder in the context of the present invention can be obtained by micronisation or another conventional process for reducing the particle size of the starting micro- or nanocellular material (for example, a sheet, a plate, or beads) such that said polymer material in the form of powder has the following characteristics:
- a bulk density between about 50 kg/m³ and about 250 kg/m³;
- a cell size between about 50 nm and about 10 µm;
- an open cell content above about 80%, preferably above about 90%; and
- preferably, thermal conductivity measured at atmospheric pressure (i.e., at a pressure of 1013 mbar (101.3 kPa)) between about 30 mW/(m·K) and about 50 mW/(m·K), preferably between about 32 mW/(m·K) and about 40 mW/(m·K).

The density of the starting micro- or nanocellular polymer materials described herein can be determined according to the ISO 1183-1:2019 standard by means of using the Archimedes' principle-based water displacement method, which is commonly known by one skilled in the art. To that end, a density determination kit for a AT261 Mettler-Toledo balance can be used. Likewise, the cellular structure, particularly the cell size of these starting materials, can be determined as described above for the case of the compacted polymer material according to the invention.

The starting micro- or nanocellular polymer material can be obtained by means of methods known by one skilled in the art such as gas dissolution or batch foaming (S. Costeux, CO 2 -blown nanocellular foams, J. Appl. Polym. Sci. 131 (2014) 41293(1)-41293(16). https://doi.org/10.1002/app.41293) or by means of autoclave bead foaming methods (WO2022/117642 A1 of Cellmat Technologies S.L.) or extrusion foaming *(*M. Haurat, M. Sauceau, F. Baillon, L. Le Barbenchon, M. Pedros, M. Dumon, Supercritical CO2-assisted extrusion foaming: A suitable process to produce very lightweight acrylic polymer micro foams, J. Appl. Polym. Sci. 140 (2023) e53277).

For example, gas dissolution foaming consists mainly of four steps. The first step is solid sample saturation. To that end, solid samples in the form of sheets are introduced into a pressurised container at specific temperature and pressure conditions. Preferably, the foaming agent is CO₂, although others can be used. The temperature is generally between -40°C and 100°C and the pressure is between 5 MPa and 35 MPa. The sample is thus kept in these conditions until it is confirmed that saturation has occurred, i.e., that the maximum amount of foaming agent has been absorbed. Depressurisation is then performed by releasing pressure quickly, where said pressure may drop at a speed between 1 MPa/s and 1000 MPa/s. In this step, the sample may have expanded if the process temperature reached is higher than the effective glass transition temperature of the polymer material, and this is known as a one-step foaming process. Meanwhile, if the temperature reached is lower than the effective glass transition temperature of the polymer material, a third sample heating step is required to promote expansion, and this is known as a two-step foaming process. The generated structure must then be frozen to prevent degeneration by tempering in a thermal bath at low temperatures.

Another aspect of the present invention relates to the use of the compacted polymer material described herein, particularly when it is obtained by the manufacturing process of the invention, as a core in a vacuum insulation panel.

Likewise, another additional aspect of the present invention relates to a vacuum insulation panel comprising a core and a covering that completely surrounds the core, characterised in that the core comprises the compacted polymer material as described herein.

In addition to the compacted micro- or nanocellular polymer material, the VIP panel of the present invention also comprises at least one covering (also referred to herein as a "cover") that completely surrounds said compacted polymer material. This covering can be hermetically sealed, for example, by means of using heat sealing clamps, such that vacuum pressure can be maintained inside the panel.

The covering or cover of the VIP panel of the present invention may have a conventional structure and composition for panels of this type. Therefore, the covering or cover used to manufacture the VIP panel of the present invention can be a commercially available material conventionally used for manufacturing panels of this type. Particularly, this covering or cover may comprise two or more layers: a sealing layer formed, for example, but in a non-limiting manner, by low- or high-density polyethylene (LDPE or HDPE) or linear low-density polyethylene (LLDPE); and one or more barrier and protective layers that may be formed by at least one material impermeable to the passage of gases such as, for example, but in a non-limiting manner, metallised polyethylene terephthalate (PET) that may have been subjected to surface treatment. Aluminium-based metal sheets and other polymer materials such as polyamide (PA) can also be used. More specifically, the cover can be a sheet formed by a layer of LDPE and a layer of metallised PET.

Due to the unexpected properties of the compacted polymer material that have been mentioned above, the VIP panel of the present invention may have a thermal conductivity, measured in a temperature condition of 10°C and a vacuum pressure condition of 0.02 mbar (0.002 kPa), between about 6 mW/(m·K) and about 25 mW/(m·K), preferably between about 6 mW/(m·K) and 15 mW/(m·K), and it can be even lower, particularly between about 4 mW/(m·K) and about 22 mW/(m·K), preferably between about 4 mW/(m·K) and about 12 mW/(m·K), when the compacted polymer material present in the core of the VIP panel comprises at least one infrared radiation blocking agent as described herein.

The VIP panel described herein may have various shapes and sizes. In particular embodiments of the present invention, the panel may have variable dimensions that may be between 10x10 mm² and 500x500 mm² and/or a thickness that may vary from 10 mm to 50 mm.

The VIP panel of the present invention can be manufactured by surrounding the compacted polymer material of the present invention, preferably obtained or can be obtained by the manufacturing process described herein, with at least one cover as defined herein, applying vacuum inside the cover, and closing said cover, wherein the vacuum pressure applied inside the panel is preferably between 10 mbar (1kPa) and 0.001 mbar (0.0001 kPa), more preferably between 10 mbar (1 kPa) and 0.02 mbar (0.002 kPa), even more preferably between 1 mbar (0.1 kPa) and 0.01 mbar (0.001 kPa).

The cover can be closed such that it is hermetically closed without allowing the passage of air into the panel. To that end, the cover can be sealed using conventional sealing means in the field such as, for example, using heat sealing clamps.

Therefore, the present invention allows a large-scale manufacturing of VIP panels, wherein these panels may have variable dimensions. Particularly, the vacuum insulation panels of the present invention may be between 10x10 mm² and 500x500mm² and may have thicknesses between 10 and 50 mm.

Another aspect of the invention relates to the use of the vacuum insulation panel described herein (also referred to herein as VIP or VIP panel) as a thermal insulation material, particularly in construction, but also in many other applications such as, for example, but in a non-limiting manner, in the packaging of temperature-sensitive material such as heat-sensitive medicinal products, organs, or vaccines, or in the field of refrigeration, for example, refrigerators, cold rooms, or refrigerated trucks.

In the context of the present invention, it should be understood that the term "about" before any number or in reference to said number designates any value in the range defined by said number ± 5%, preferably ± 2%. Therefore, for example, the expression "about 20" should be understood to mean "in the range between 19 and 21", preferably "in the range between 19.6 and 20.4".

### FIGURES

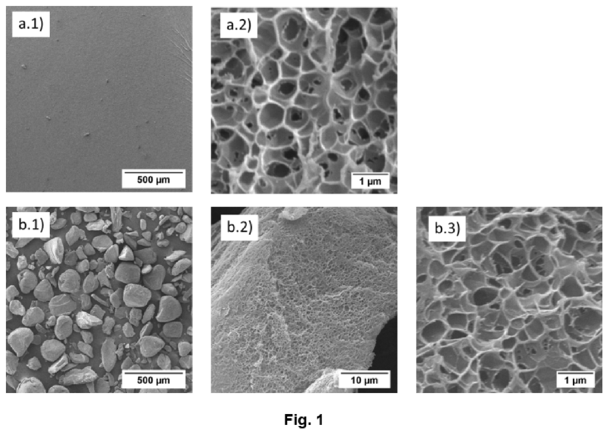

Figure 1. SEM micrographs of the cellular internal structure of a starting nanocellular polymer material (non-micronised) at low magnification (a.1) and at high magnification (a.2); particles of the same polymer material once micronised into powder (b.1) and the surface of the powder (b.2 and b.3). These SEM micrographs show the double porosity of the micronised polymer material in the context of the invention: nanocellular-sized cells inside the particles (b.2 and b.3) and micrometric gaps between the powder particles (b.1).

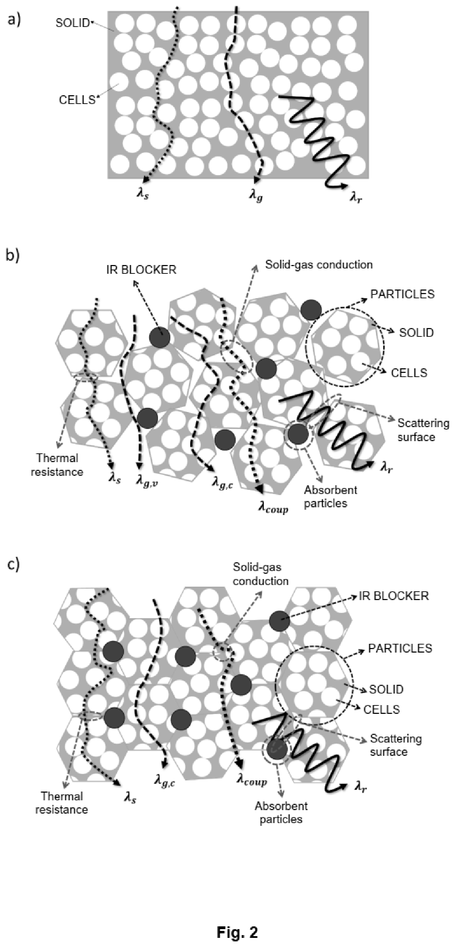

Figure 2. Schematic illustration of the structure of the starting polymer material (non-micronised) (a) of the micronised polymer material (b) and of the compacted polymer material (c), as well as of the heat transfer mechanisms which, without being bound by any theory, is considered as occurring through the materials.

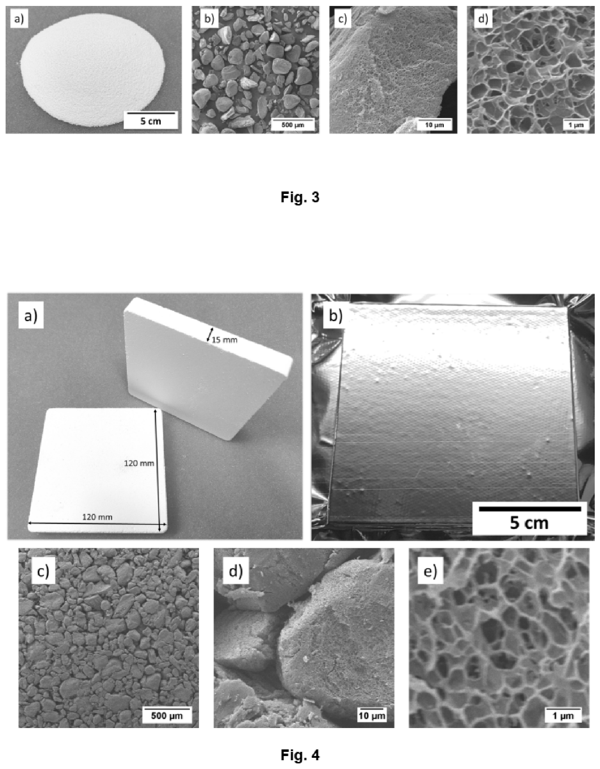

Figure 3. a) Photograph of the powder corresponding to the micronised polymer material described herein. b) SEM micrographs of the micronised polymer material. c) Surface of the particles. d) Detail of the cellular structure on the surface.
Figure 4. a) Photograph of the compacted material (core of the panel) and b) a VIP panel, wherein the compacted polymer material is surrounded by a single-layer protective film of metallised polyethylene terephthalate (PET) and at a pressure of 0.02 mbar. c) SEM micrographs of the compacted polymer material, surface. d) Detailed view of the surface of the particles. e) Detailed view of the cellular structure on the surface.

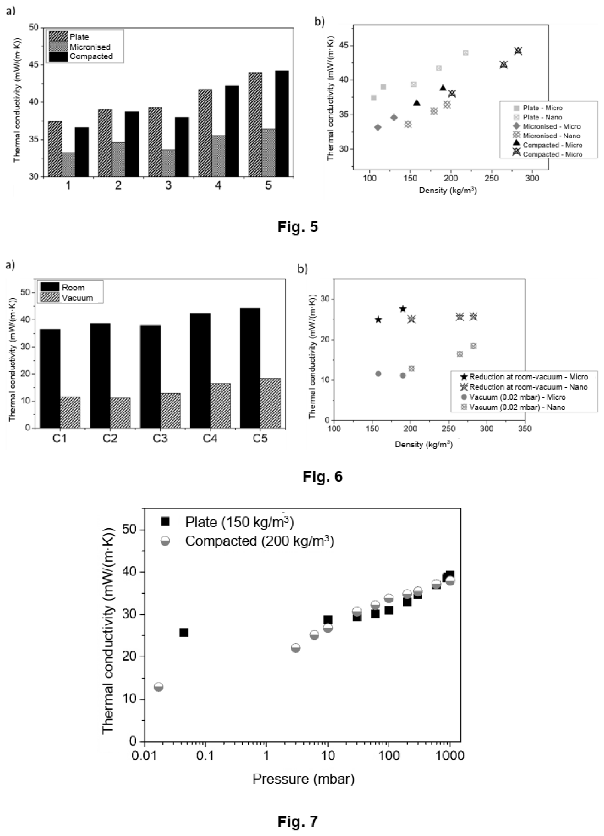

Figure 5. a) Comparison of the thermal conductivity measured at 10°C between the starting polymer material in the form of a plate, the micronised polymer material, and the compacted samples. b) Thermal conductivity as a function of density of the three types of materials. White symbols with crosses correspond to nanocellular samples 3, 4, and 5.
Figure 6. a) Thermal conductivity measured at 10°C of panels compacted at atmospheric pressure (1013 mbar (101.3 kPa)) and in vacuum pressure conditions (0.02 mbar (0.002 kPa)). b) Thermal conductivity measured at 10°C of panels compacted in vacuum pressure conditions (0.02 mbar (0.002 kPa)) as a function of the density of the panels. White symbols with crosses correspond to nanocellular samples (3, 4, and 5).
Figure 7. Thermal conductivity measured at 10°C of the compacted panel corresponding to sample 3 as a function of the pressure to which the panel was subjected. The thermal conductivity measured at 10°C as a function of the pressure value to which starting polymer material 3 in the form of a plate is subjected has been included as reference.

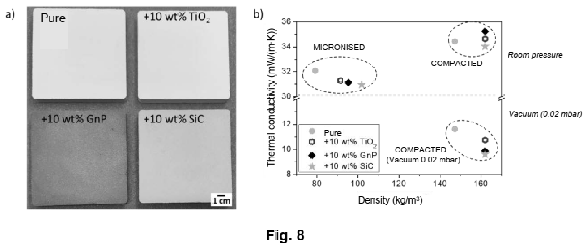

Figure 8. a) Photograph of four samples with or without the presence of 10% of different infrared radiation blockers. b) Thermal conductivity measured at 10°C of each of these samples as a function of the density of the samples in an atmospheric pressure condition (1013 mbar (101.3 kPa)) and a vacuum pressure condition (0.02 mbar (0.002 kPa)).

### EXAMPLES

### EXAMPLE 1: Obtaining compacted micro- or nanocellular polymer material according to the invention

Several samples of micronised polymer material and compacted polymer material were prepared according to the invention.

The preparation begun with nanocellular polymer materials manufactured using the gas dissolution foaming technique (samples 1 to 5 in the table) comprising a PMMA polymer matrix. The samples were micronised by means of the prior micronisation process and then impact micronisation, using liquid nitrogen to embrittle the samples. The rotor speed of the impact mill used (SR 300 (Retsch)) was 10000 rpm and the material was metered in small amounts every 15 seconds.

Samples 1-5 were then compacted by means of the thermoforming process using a hot plate press and process conditions of 80°C, 30 minutes, and 13.6 MPa.

Table 1 shows the values of density, average cell size measured in 3D, open cell content, and bulk density, all these parameters being measured as indicated in the description, of samples 1-5 before and after the micronisation and compaction process.

**Table 1**

| **STARTING POLYMER MATERIAL** | | | | **MICRONISED MATERIAL** | | | **COMPACTED MATERIAL** |
|---|---|---|---|---|---|---|---|
| **#** | Density (kg/m³) | Cell size (nm) | Open cell content (%) | Bulk density (kg/m³) | Particle size (µm) | Open cell content (%) | Bulk density (kg/m³) |
| **1** | 105±12 | 1459 | 6±1 | 110±2 | 77 | 87±1 | 158±2 |
| **2** | 117±17 | 2916 | 3±1 | 130±2 | 102 | 94±1 | 190±2 |
| **3** | 154±10 | 468 | 99±1 | 147±2 | 94 | 98±1 | 201±2 |
| **4** | 185±9 | 408 | 86±1 | 179±3 | 102 | 92±1 | 265±3 |
| **5** | 218±10 | 394 | 74±1 | 195±3 | 100 | 97±1 | 282±3 |

Furthermore, for each of samples 1-5, thermal conductivity values were determined by means of using a FOX 200 heat flow conductivity meter (TA Instruments/LaserComp, Inc.) and bulk density was determined before and after the micronisation and compaction process.

Figure 5a shows the thermal conductivity values measured at 10°C and atmospheric pressure (considered as 1013 mbar (101.3 kPa)) for each of the samples before and after the micronisation and compaction process. Likewise, Figure 5b shows the comparison of the thermal conductivity values as a function of the density values of each of the three types of materials: the starting material, the micronised polymer material, and the compacted polymer material for each of samples 1-5. As can be seen in Figure 5a, the thermal conductivity values measured at atmospheric pressure (considered as 1013 mbar (101.3 kPa)) for the compacted samples varied between 36.6 mW/(m·K) and 44.6 mW/(m·K). Although the compacted samples had a higher density than the starting polymer materials (non-micronised), it was observed that the conductivity values for the case of micronised and compacted samples were similar to or lower than those obtained for the starting materials. For example, for sample 1, the starting polymer material, with a density of 105 kg/m ³, had a thermal conductivity value of 37.4 mW/(m·K), while the corresponding compacted sample, with a density of 158 kg/m ³, had a conductivity value of 36.6 mW/(m·K).

This trend could also be observed in Figure 5b, wherein thermal conductivity values were represented as a function of the density of the three types of materials, i.e., the starting material, the micronised material, and the compacted material, for each of samples 1-5. Two clear trends were observed; the trend observed, on the one hand, for the starting polymer material with a continuous structure and, on the other hand, for the micronised and compacted polymer materials with a discontinuous structure according to the present invention, which had lower conductivity values. However, it can be observed that the materials according to the invention showed a similar trend in terms of density that is, however, different from that observed in the starting polymer material with a continuous structure. That is, an increase in thermal conductivity was observed as a function of the increase in sample density for the micronised and compacted polymer materials according to the invention.

The results shown in Figure 5 demonstrate that for samples 1-5, the thermal conductivity values of the micronised polymer materials in the context of the invention were lower than the values observed for the starting polymer material, probably due to the discontinuous structure of the solid phase of said samples. Furthermore, in the compacted materials, the conductivity observed is comparable to that of the starting material, despite having a higher density, again indicating an improvement due to this discontinuity.

Furthermore, it was observed that for nanocellular samples 3, 4, and 5, despite having higher density values, thermal conductivity values that are lower than those obtained for the rest of the microcellular samples were obtained.

On the other hand, Figure 6a shows the thermal conductivity values measured at 10°C of the samples compacted at atmospheric pressure (1013 mbar (101.3 kPa)) and under vacuum (0.02 mbar (0.002 kPa)). A significant reduction was observed in the thermal conductivity values of the samples compacted under vacuum with respect to those determined for the samples that were at atmospheric pressure. In particular, it was observed that the thermal conductivity values of the samples subjected to vacuum pressure varied from 11.2 mW/(m·K) to 18.5 mW/(m·K).

Furthermore, Figure 6b shows the reduction in the thermal conductivity values mW/(m·K) measured at 10°C for the samples at atmospheric pressure and under vacuum as a function of density. A slightly lower reduction in the conductivity values was observed for nanocellular samples 3, 4, and 5 (white symbols in Figure 6b), probably due to the smaller fraction of gaseous phase to be extracted in samples of this type when vacuum is applied. However, as shown in Figure 6a, the reduction in thermal conductivity values was significantly high (greater than 25 mW/(m·K)). In particular, for compacted sample 3, a reduction from 38 mW/(m·K) to 12.8 mW/(m·K) was obtained, i.e., a reduction of 25.2 mW/(m·K) was observed. This result was surprising and unexpected since the expected reduction for a starting material with a continuous structure and the same density and cell size characteristics was 13 mW/(m·K), taking into account the contribution of the gaseous phase to the thermal conductivity value and the contribution by conduction according to the Knudsen effect (I. Sánchez-Calderón, V. Bernardo, J. Martín-de-León, M.Á. Rodríguez-Pérez, Thermal conductivity of low-density micro-and nanocellular poly(methyl-methacrylate) (PMMA): Experimental and modeling, Mater. Des. 221 (2022) 110938). However, the reduction in thermal conductivity values for the compacted materials according to the present invention was almost twice as much as expected, suggesting that there must be an additional heat transfer mechanism associated with the gas phase.

Three different mechanisms which contribute to thermal conductivity are present in the polymer materials of the present invention: thermal conductivity through the gaseous phase (λg), thermal conductivity through the solid phase (λs), and thermal conductivity by radiation (λr). Without being bound by any theory, the inventors consider that in the micronised polymer material, the component of thermal conductivity through the solid phase (λs) and thermal conductivity by radiation (λr) decrease; however, unexpectedly, two new mechanisms that are not present in the starting material (non-micronised) appear, namely conduction through the gaps between the powder particles (λg,v) and heat transfer by coupling between the solid phase and gaseous phase (λcoup), which make the thermal conductivity of the material in the form of powder and the starting material (non-micronised) similar. These two new heat transfer mechanisms are reduced or eliminated when the micronised polymer material is compacted and subjected to vacuum pressure (particularly, at a pressure between about 0.02 mbar (0.002 kPa) and about 10 mbar (1 kPa)), resulting in the unexpected reduction in the thermal conductivity of the VIP panels of the present invention (see schematic illustration of these mechanisms in Figure 2).

Furthermore, it was observed that both the thermal conductivity values and the reduction in thermal conductivity values under vacuum depended on density. Theoretically, thermal conductivity values were expected to be higher as density values increased, since, in vacuum conditions, the heat transfer mechanisms known to date for micro- or nanocellular polymer materials are conduction through the solid phase (which increases when density increases) and radiation (which decreases when density increases), with the contribution by conduction through the solid phase being dominant over the contribution by radiation. Accordingly, an increase in total thermal conductivity values was expected. However, contrary to all expectations, a greater than expected reduction in thermal conductivity values was observed when going from atmospheric pressure to vacuum pressure with increase in density.

Figure 7 shows the thermal conductivity values measured at 10°C as a function of pressure for the case of compacted sample 3. According to the Knudsen effect for the starting material with a continuous structure and a density of 154 kg/m ³, it was determined that conduction through the gaseous phase was 14 mW/(m·K), similar to the reduction observed when vacuum is applied. Meanwhile, for the compacted material having a density of 201 kg/m ³, conduction through the gaseous phase was 13 mW/(m·K). However, as mentioned above, there was an additional reduction of 12 mW/(m·K) when the sample was subjected to pressures below 10 mbar (1 kPa) that could not be justified by contribution through the gaseous phase to the total thermal conductivity value. Therefore, without being bound to any theory, it is considered that this clearly shows the existence of heat transfer mechanisms in addition to those known to date for materials of this type, which may be associated with the presence of the particles and the pressure in the systems in the form of powder according to the invention.

### EXAMPLE 2: Influence of the addition of infrared radiation blockers to the sample on thermal conductivity values.

Following the process described in Example 1, a sample of micronised polymer material (sample 6) having a PMMA composition with no additional additives was prepared with the characteristics shown in Table 2 below.

**Table 2**

| **STARTING POLYMER MATERIAL** | | | | **MICRONISED MATERIAL** | | |
|---|---|---|---|---|---|---|
| **#** | Density (kg/m³) | Cell size (nm) | Open cell content (%) | Bulk density (kg/m³) | Particle size (µm) | Open cell content (%) |
| **6** | 100±10 | 800 | 88±1 | 80±5 | 145 | 99±1 |

This micronised PMMA polymer material was separately mixed with the following three infrared radiation blocking agents: titanium oxide (TiO ₂) (sample 7), graphene nanosheets (sample 8), and silicon carbide (sample 9). The three materials were prepared by simply mixing the micronised material (sample 6) with the corresponding additive in a weight ratio of 90:10 (PMMA:blocking agent). The three materials were then compacted following a process identical to that explained in Example 1 above.

Figure 8a) shows a photograph comparing the compacted polymer materials obtained: Pure PMMA without additives (sample 6), PMMA with 10% TiO ₂ (sample 7), PMMA with 10% by weight of graphene nanosheets (GnP) (sample 8), and PMMA with 10% by weight of SiC (sample 9). As can be seen in Figure 8b), the addition of 10% by weight of different infrared radiation blockers to the PPMA matrix significantly reduced thermal conductivity values when the compacted sample was subjected to vacuum, obtaining values below 10 mW/(m·K).

## Claims

1. A polymer material in the form of compacted powder particles, **characterised in that** it has a bulk density between about 50 kg/m³ and about 350 kg/m³, wherein the particles have a cellular structure with a cell size between about 50 nm and about 10 µm and an open cell content above about 80%, preferably above about 90%.

2. The polymer material according to claim 1, wherein said material is obtained by compacting a polymer material in the form of powder with an average particle size between about 1 µm and about 500 µm, preferably between about 5 µm and about 200 µm.

3. The polymer material according to claim 1 or 2, comprising a polymer matrix formed by one or more polymers selected from the group consisting of:
- amorphous polymers selected from poly(methyl methacrylate) (PMMA), polystyrene (PS), polyetherimide (PEI), polycarbonate (PC), and polyphenylsulfone (PSU);
- thermoplastic elastomers selected from thermoplastic polyurethane (TPU), thermoplastic polyolefin (TPO), and thermoplastic polyether polyamide (PEBA);
- semicrystalline polymers selected from low-density polyethylene (LDPE), high-density polyethylene (HDPE), ethyl vinyl acetate (EVA), and polypropylene (PP); and
- a combination of the foregoing.

4. The polymer material according to any one of the preceding claims, comprising a polymer matrix in turn comprising at least one nucleating agent.

5. The polymer material according to claim 4, wherein the nucleating agent is selected from the group consisting of:
- nanoparticles selected from nanosilica, nanoclay, nanometric sepiolites, and nanofibres;
- organic polymers selected from acrylic block copolymers, styrene block copolymers, and thermoplastic elastomers; and
- a combination of the foregoing.

6. The polymer material according to any one of claims 1 to 5, wherein said material comprises at least one infrared radiation blocking agent.

7. The polymer material according to claim 6, wherein the infrared radiation blocking agent is selected from the group consisting of graphite, carbon black, silicon carbide, titanium oxide, graphene, carbon nanotubes, and a combination of the foregoing.

8. The polymer material according to any one of claims 1 to 7, wherein said material comprises at least one additive selected from the group consisting of flame retardant agent, dye, desiccant, absorbent, additives with low thermal conductivity, and a combination of the foregoing.

9. The polymer material according to any one of claims 1 to 8, having a thermal conductivity, measured in a temperature condition of 10°C and a vacuum pressure condition of 0.02 mbar (0.002 kPa), between about 6 mW/(m·K) and about 25 mW/(m·K), preferably between about 6 mW/(m·K) and 15 mW/(m·K).

10. The polymer material according to any one of claims 6 to 8, having a thermal conductivity, measured in a temperature condition of 10°C and a pressure condition of 0.02 mbar (0.002 kPa), between about 4 mW/(m·K) and about 22 mW/(m·K), preferably between about 4 mW/(m·K) and about 12 mW/(m·K).

11. A process for manufacturing a polymer material as defined in any one of claims 1 to 10, **characterised in that** said process comprises:
a) obtaining a polymer material in the form of powder, wherein said material comprises at least one polymer and, optionally, at least one additional component selected from a nucleating agent, an infrared radiation blocker, an additional additive, and a combination thereof, wherein this polymer material in the form of powder has:
- an average particle size between about 1 µm and about 500 µm, preferably between about 5 µm and about 200 µm;
- a bulk density between about 25 kg/m³ and about 250 kg/m³;
- a cellular structure with a cell size between about 50 nm and about 10 µm and an open cell content above about 80%, preferably above about 90%; and
b) compacting the polymer material in the form of powder obtained in step a) to obtain a polymer material in the form of compacted powder.

12. Use of the polymer material as defined in any one of claims 1 to 10 as a core in a vacuum insulation panel.

13. A vacuum insulation panel comprising a core and a covering that completely surrounds the core, **characterised in that** the core comprises the polymer material as defined in any one of claims 1 to 10.

14. The vacuum insulation panel according to claim 13, wherein said panel has dimensions between 10x10 mm² and 500x500 mm² and a thickness between about 10 mm and about 50 mm.

15. Use of the vacuum insulation panel as defined in claim 13 or 14 as thermal insulation.
